# FASCICULE DE BREVET EUROPEEN

(11) **EP 1 412 107 B1**
(45) Date de publication et mention de la délivrance du brevet: **29.04.2009**
(21) Numéro de dépôt: 02791515.6
(22) Date de dépôt: 01.08.2002
(51) Int. Cl.: B21D 41/02, B29C 57/04

(54) **DISPOSITIF D'OUTIL A EXPANSION POUR PINCE A EMBOITURE**
DEHNUNGSWERKZEUG FÜR AUFWEITZANGE
EXPANSION TOOL DEVICE FOR SOCKET PLIERS

(30) Priorité: 01.08.2001 FR 0110319
(43) Date de publication de la demande: 28.04.2004
(73) Titulaire: VIRAX S.A., F-51200 Epernay (FR)
(72) Inventeur: TANDART, Jean-Marie, F-51200 Epernay (FR)
(74) Mandataire: Rhein, Alain
(86) Numéro de dépôt international: PCT/FR2002/002776
(87) Numéro de publication internationale: WO 2003/011496

(56) Documents cités:
- EP-A- 0 878 287
- WO-A-98/06519
- FR-A- 2 645 052
- US-A- 3 888 102
- US-A- 4 034 591

## Description

La présente invention a pour objet un dispositif d'outil à expansion pour pince à réaliser des emboîtures aux extrémités de tuyaux en matière plastique ou analogue, utilisés dans le domaine de la plomberie.

En plomberie, les raccordements de tuyaux en matière plastique ou analogue sont réalisés à l'aide de raccords métalliques sur lesquels les tuyaux sont emboîtés. Les extrémités des tuyaux sont au préalable élargies au moyen d'une pince à emboîture munie d'un outil à expansion.

Après réalisation de l'emboîture, le tuyau est immédiatement emboîté sur le raccord et, du fait des propriétés élastiques de la matière plastique, le tuyau tend à reprendre sa forme initiale et enserre le raccord, ce qui suffit à la solidarisation, laquelle est toutefois complétée par la présence d'une bague externe évasée en même temps que l'extrémité du tuyau.

Une emboîture sur un tuyau en matière plastique n'est pas tout à fait réalisée comme une emboîture sur un tube en cuivre recuit. En effet, il convient d'évaser suffisamment largement l'extrémité du tuyau pour permettre l'emboîtement avant reprise de forme, tout en évitant de créer une déformation plastique au lieu d'une déformation élastique.

Par ailleurs, pour des raisons évidentes de résistance, l'épaisseur de la paroi du tuyau augmente avec le diamètre de celui-ci, et plus l'épaisseur augmente, plus le retour élastique est rapide, ce qui nécessite un évasement plus important.

De manière connue, une pince à emboîture, utilisée traditionnellement pour la réalisation d'emboîtures dans des tuyaux en cuivre recuit, comporte d'une part un outil à expansion comprenant un embout de forme cylindrique constitué du rapprochement de plusieurs mors en forme de secteur et mobiles dans le sens radial, et d'autre part une aiguille conique mobile axialement par le manoeuvrement de deux branches, apte à s'insérer entre lesdits mors, dans un évidement conique, pour provoquer leur écartement, le retour en position initiale étant réalisé par l'intermédiaire de moyens élastiques. De manière avantageuse, l'outil est désolidarisable de la pince, ce qui permet d'adapter sur celle-ci l'outil correspondant au diamètre du tube à évaser, et donc d'utiliser la même pince pour plusieurs diamètres.

On notera que la pince peut être à fonctionnement manuel ou motorisé par l'intermédiaire de moyens hydrauliques par exemple.

Ces pinces à emboîture présentent toutefois des limites, notamment pour des tuyaux en matière plastique de gros diamètre, par exemple de l'ordre de 40 mm. La réalisation d'une emboîture sur un tel tuyau, lequel requiert que le diamètre d'évasement soit supérieur d'environ 50% au diamètre nominal, nécessite une technique particulière et l'utilisation d'un outil à expansion présentant des caractéristiques spécifiques. Il n'est en effet pas possible d'effectuer l'évasement en une seule opération, d'une part en raison de la force nécessaire, d'autre part du fait de l'amplitude de l'évasement à réaliser et de celle, limitée, du déplacement des mors, et d'autre part encore pour éviter de réaliser une déformation plastique.

On procède donc par une succession d'évasements accompagnée d'une pénétration progressive de l'embout dans le tuyau. Pour mettre en oeuvre cette technique, l'embout présente une portion extrême légèrement conique qui est destinée à être introduite progressivement dans le tuyau.

On a cependant constaté des cas fréquents de fuites sur des installations sanitaires utilisant des tuyaux en matière plastique de fort diamètre, lesdites fuites étant dues à des emboîtures de forme irrégulière.

En fait, lors des premières étapes de l'opération d'évasement, seule l'extrémité de l'outil travaille, et du fait du déport de l'effort par rapport à l'action de l'aiguille conique, les mors fléchissent et se positionnent irrégulièrement les uns par rapport aux autres, créant ainsi localement des déformations plastiques de la matière, lesquelles sont préjudiciables au retour élastique et donc à l'étanchéité de la solidarisation.

On pourrait envisager d'utiliser des outils spécifiques associés à une pince particulière, c'est-à-dire comportant une aiguille de dimensions plus importantes, avec toutefois pour inconvénient pour l'utilisateur de multiplier le nombre de pinces nécessaire.

Pour tenter de pallier cet inconvénient, il a été proposé dans le document FR 2.300.638 un dispositif d'adaptateur destiné à être monté, comme pièce intermédiaire, sur une pince et à recevoir un outil à expansion. Cet adaptateur comporte intérieurement un élément apte à s'intercaler entre l'aiguille conique et les mors de l'outil à expansion, il comporte à cet effet une extrémité présentant un évidement conique destiné à coopérer avec l'aiguille conique de la pince, et à son autre extrémité présente une forme conique destinée à coopérer avec l'évidement conique des mors de l'outil, les angles de conicité étant identiques mais les diamètres sont différents.

Il est donc possible de choisir le dispositif d'adaptateur correspondant à l'outil que l'on désire utiliser. Cependant, ce dispositif ne permet pas de résoudre totalement le problème posé en ce sens que, outre la nécessité pour l'utilisateur de disposer de plusieurs adaptateurs et donc d'avoir à les transporter sur le lieu de travail, ledit utilisateur doit régulièrement changer d'adaptateur en fonction du diamètre du tube à évaser, en s'attachant à vérifier à chaque fois que ledit adaptateur est bien conforme à l'outil à utiliser. En fait ce dispositif équivaut à la solution évoquée précédemment, c'est-à-dire que cela revient à utiliser plusieurs pinces.

Il serait parfaitement possible, pour éviter d'avoir à utiliser plusieurs adaptateurs présentant des caractéristiques dimensionnelles différentes, de prévoir un seul adaptateur présentant des caractéristiques dimensionnelles moyennes, en sorte que puisse y être adapté tous un grand nombre d'outils, avec toutefois l'inconvénient d'un travail loin d'être optimal pour la majorité des diamètres concernés.

La présente invention a pour but de remédier à ces divers inconvénients en proposant un dispositif d'outil à expansion pour pince à réaliser des emboîtures aux extrémités de tuyaux en matière plastique ou analogue, utilisés dans le domaine de la plomberie, permettant à l'utilisateur de n'avoir à disposer que d'une seule pince quel que soit le diamètre des tubes à évaser.

Le dispositif d'outil à expansion pour pince à réaliser des emboîtures aux extrémités de tuyaux en matière plastique ou analogue, utilisés dans le domaine de la plomberie selon l'invention, est du type comportant un embout en forme de cylindre constitué du rapprochement de plusieurs mors en forme de secteurs, lesquels sont mobiles dans le sens radial sous l'action d'une aiguille conique manoeuvrée par une pince et apte à s'insérer axialement entre lesdits mors dans un évidement conique, et il se caractérise essentiellement en ce qu'il comprend un insert mobile axialement entre lesdits mors, et destiné à recevoir l'aiguille conique de ladite pince lors de la fixation de l'outil sur cette dernière, ledit insert comportant une extrémité présentant une cavité conique destinée à coopérer avec ladite aiguille conique, tandis que son autre extrémité présente une forme conique adaptée à l'évidement conique desdits mors, les parties coniques desdites extrémités étant d'angles de conicité sensiblement identiques mais de diamètres différents.

L'insert crée un prolongement de l'aiguille conique qui pénètre plus profondément entre les mors, permettant ainsi de conduire le déplacement de ceux-ci, même au niveau de leur extrémité durant la totalité de l'opération d'expansion. Il est donc possible, même si l'embout est d'une longueur importante, de créer dans ce dernier une cavité conique interne plus profonde, permettant ainsi que lesdits mors soient sur toute leur longueur en contact avec l'insert.

De manière avantageuse, l'embout présente une portion extrême légèrement tronconique.

Selon un mode de réalisation particulier du dispositif selon l'invention, il comporte une douille retenant les mors en forme de secteur qui forment par leur rapprochement un embout de forme cylindrique qui présente intérieurement un évidement conique axial, lesdits mors étant mobiles en déplacement radial et rappelés par des ressorts, tandis qu'un insert de forme extérieure conique, logé dans ledit évidement conique et retenu dans ladite douille, est mobile axialement dans cette dernière et présente une cavité interne conique apte à accueillir l'aiguille conique d'une pince à emboîture, le profil extérieur conique et ladite cavité interne conique étant de même angle de conicité.

Les avantages et les caractéristiques du dispositif selon l'invention, ressortiront plus clairement de la description qui suit et qui se rapporte au dessin annexé, lequel en représente un mode de réalisation non limitatif.

### Dans le dessin annexé :

La figure 1 représente une vue schématique en coupe axiale d'un dispositif d'outil à expansion de type connu.

La figure 2 représente une vue schématique en coupe axiale d'un dispositif d'outil à expansion selon l'invention.

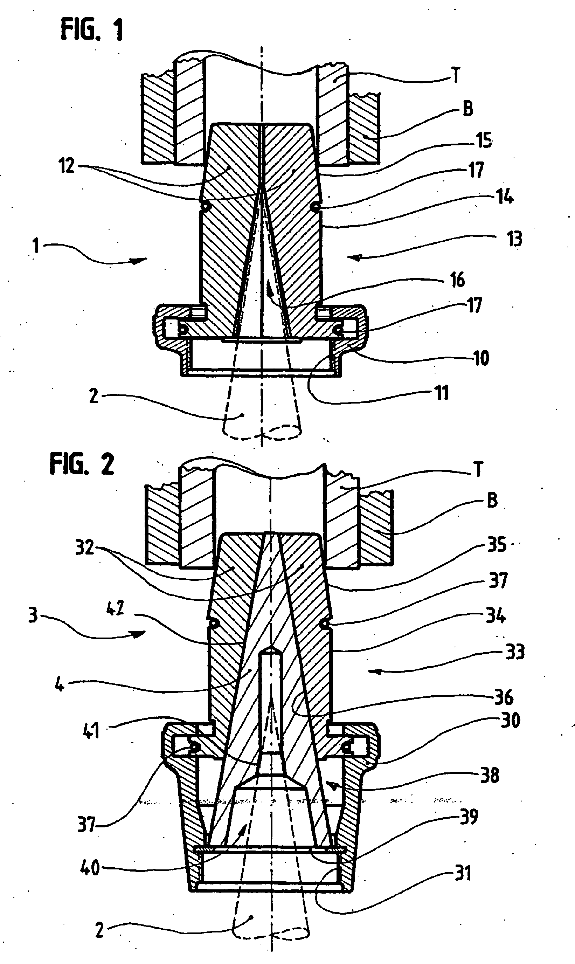

En référence à la figure 1, on peut voir un dispositif d'outil à expansion 1 de type connu, pour réaliser une emboîture dans un tuyau T en matière plastique, dont l'extrémité est généralement garnie extérieurement d'une bague B. Le dispositif d'outil 1 comporte une douille 10 présentant un filetage intérieur 11 pour l'adaptation sur une pince, non représentée, et qui retient des mors 12, généralement six, de section transversale en forme de secteur, en sorte que leur rapprochement forme un embout cylindrique 13. La surface de travail 14 de l'embout 13 n'est pas entièrement cylindrique, sa portion extrême 15 étant légèrement conique pour permettre son introduction dans l'extrémité du T à évaser.

L'embout 13 présente intérieurement un évidement conique 16 résultant du creusement du côté interne de chacun des mors 12, et qui est destiné à accueillir l'aiguille conique 2, représentée en traits discontinus, de la pince à emboîture, non représentée. Les mors 12 sont mobiles librement dans le sens radial, retenus par la douille 10 et rappelés par deux ressorts périphériques 17.

On comprend qu'un déplacement axial de l'aiguille conique 2, dans le sens de son enfoncement dans l'évidement conique 16, engendre un déplacement radial proportionnel des mors 12, et donc un agrandissement du diamètre de l'embout 13.

L'angle de conicité de l'aiguille 2 et de l'évidement 16 est choisi pour d'une part permettre une amplitude d'évasement suffisante en fonction de la course de l'aiguille 2, et d'autre part une démultiplication suffisante de l'effort à fournir. En effet, une aiguille 2 très effilée permettrait une grande démultiplication de l'effort mais nécessiterait une course importante pour atteindre l'amplitude d'évasement désirée, d'autant plus lorsqu'il s'agit de réaliser une emboîture dans un tuyau T en matière plastique. Par ailleurs, une aiguille 2 d'angle plus grand permettrait d'augmenter l'amplitude d'évasement au détriment de la facilité de manoeuvrement.

Dans le cas de la réalisation d'une emboîture dans un tuyau T en matière plastique, du fait de l'amplitude d'évasement et de la limitation de l'expansion des mors 12 liée à la conicité et à la course de l'aiguille 2, le diamètre de l'embout 13 est légèrement supérieur à celui interne du tuyau T, d'où la présence de la portion extrême 15 permettant l'amorce de l'évasement jusqu'à introduction totale de l'embout 13.

On comprendra par ailleurs que la longueur de l'embout 13 est également liée au diamètre de l'emboîture à réaliser, en sorte que, dans le cas du mode de réalisation représenté, à l'amorce de l'évasement, la portion conique 15 de l'embout 13 est engagée partiellement dans le tuyau T à évaser, et l'effort résistant est reporté sur les extrémités des mors 12, alors que leur déplacement est réalisé par l'aiguille 2 essentiellement au niveau de l'embouchure de l'évidement 16, ce qui engendre un écartement irrégulier des mors 12 les uns des autres et donc une déformation non uniforme du tuyau T.

En référence maintenant à la figure 2, on peut voir un dispositif d'outil à expansion 3 selon l'invention. Celui-ci comporte de manière similaire une douille 30 munie d'un filetage interne 31 et retenant des mors 32 en forme de secteur qui forment par leur rapprochement un embout 33 dont la surface de travail 34 comporte une portion extrême 35 conique et qui présente intérieurement un évidement conique 36, les mors 32 étant mobiles en déplacement radial et rappelés par des ressorts 37.

Selon l'invention, l'outil 3 renferme un insert 4 logé dans l'évidement 36, mobile axialement dans la douille 30 qui comporte à cet effet un logement 38, et présentant une cavité interne 40 apte à accueillir l'aiguille conique 2 d'une pince à emboîture, non représentée.

On notera que de manière avantageuse, la cavité interne conique 40 consiste en fait en une cavité comportant un rétrécissement 41 présentant une surface tronconique qui favorise l'accouplement avec l'aiguille 2.

L'insert 4 présente une paroi extérieure 42 de forme conique, de même angle de conicité que la cavité 36 dans laquelle il s'insère, et de préférence de même angle de conicité que l'aiguille 2.

En outre, le déplacement axial de l'insert 4 est borné, du côté opposé aux mors 32, par une rondelle élastique 39.

L'insert 4 constitue donc un prolongement de l'aiguille 2, apte à pénétrer plus profondément dans l'embout 33. Ainsi, dans le mode de réalisation représenté, l'évidement 36 est plus large et débouche à l'extrémité de l'embout 33, en sorte que, dès l'amorce de l'expansion de ce dernier, les extrémités des mors 32 reposent sur l'insert 4 qui les soutient empêchant donc le fléchissement des mors 32 qui s'écartent de manière uniforme.

On notera que du fait de la présence de l'insert 4, l'évidement 36 présente des dimensions transversales plus importantes, c'est-à-dire qu'à diamètres extérieurs égaux les mors 32 de l'outil 3 sont moins épais et donc moins robustes que les mors 12 de l'outil 1, ce qui est toutefois peu important, les mors 32 ne nécessitant pas d'être résistants au fléchissement puisqu'ils sont soutenus sur toute leur longueur par l'insert 4.

Le dispositif selon l'invention peut ainsi permettre la réalisation d'emboîtures de qualité dans des tuyaux en matière plastique avec une pince à emboîture de type classique, même lorsque lesdits tuyaux sont d'un fort diamètre.

Ainsi, l'utilisateur n'a pas à se préoccuper de savoir quelle pince est adaptée à l'outil qu'il doit employer, ou bien quel dispositif adaptateur il doit utiliser avec l'outil choisi, il lui suffit de prendre l'outil adapté au diamètre du tube à évaser et à le fixer sur la seule et unique pince dont il dispose, quel que soit ledit diamètre.

De manière avantageuse, chaque outil peut comporter un insert présentant des caractéristiques dimensionnelles adaptées au diamètre de l'outil, en sorte de permettre un travail optimal.

## Revendications

1. Dispositif d'outil à expansion pour pince à réaliser des emboîtures aux extrémités de tuyaux (T) en matière plastique ou analogue, utilisés dans le domaine de la plomberie, du type comportant un embout (3) en forme de cylindre constitué du rapprochement de plusieurs mors (32) en forme de secteurs et mobiles dans le sens radial sous l'action d'une aiguille conique (2) manoeuvrée par une pince et apte à s'insérer axialement entre lesdits mors (32) dans un évidement conique (36), **caractérisé en ce qu'**il comprend un insert (4) mobile axialement entre lesdits mors (32), et destiné à recevoir l'aiguille conique (2) de ladite pince lors de la fixation de l'outil sur cette dernière, ledit insert (4) comportant une extrémité présentant une cavité conique (40) destinée à coopérer avec ladite aiguille conique (2), tandis que son autre extrémité (42) présente une forme conique adaptée à l'évidement conique (36) desdits mors (32), les parties coniques (40, 42) desdites extrémités étant d'angles de conicité sensiblement identiques mais de diamètres différents.

2. Dispositif selon la revendication 1, **caractérisé en ce que** l'embout (3) présente une portion extrême (35) légèrement tronconique

3. Dispositif selon la revendication 1 ou la revendication 2, **caractérisé en ce qu'**il comporte une douille (30) retenant les mors (32) en forme de secteur qui forment par leur rapprochement un embout (3) de forme cylindrique qui présente intérieurement un évidement conique axial (36), lesdits mors (32) étant mobiles en déplacement radial et rappelés par des ressorts (37), tandis qu'un insert (4) de forme extérieure conique, logé dans ledit évidement conique (36) et retenu dans ladite douille (30), est mobile axialement dans cette dernière et présente une cavité interne conique (40) apte à accueillir l'aiguille conique (2) d'une pince à emboîture, le profil extérieur conique (42) et ladite cavité interne conique (40) étant de même angle de conicité.

4. Dispositif selon la revendication 3, **caractérisé en ce que** la cavité interne conique (40) consiste en une cavité comportant un rétrécissement (41) présentant une surface tronconique favorisant l'accouplement avec l'aiguille (2).

## Claims

1. Expansion tool device for pliers used for producing sockets at the ends of pipes (T) made of plastic material or the like, used in the field of plumbing, of the type comprising a cylindrical end piece (3) formed by the closure of several sector-shaped jaws (32) and radially mobile under the action of a conical needle (2) operated by pliers and adapted to be axially inserted between said jaws (32) in a conical recess (36), wherein it comprises an insert (4) axially mobile between said jaws (32), and capable of receiving the conical needle (2) of said pliers when the tool is fixed to the latter, said insert (4) including an end having a conical cavity (40) capable of co-operating with said conical needle (2), while its other end (42) has a conical form adapted to the conical recess (36) of said jaws (32), the conical portions (40, 42) of said ends being of substantially identical coning angles, but of different diameters.

2. Device according to claim 1, wherein the end piece (3) has a slightly frustoconical extreme portion (35).

3. Device according to claim 1 or claim 2, wherein it includes a bushing (30) holding the sector-shaped jaws (32) forming by their closure a cylindrical end piece (3) having, internally, an axial conical recess (36), said jaws (32) being mobile in radial displacement and restored by springs (37), while an externally conical insert (4), accommodated in said conical recess (36) and held in said bushing (30), is axially mobile in the latter and has an internal conical cavity (40) adapted to receive the conical needle (2) of socket pliers, the external conical profile (42) and said internal conical cavity (40) having the same coning angle.

4. Device according to claim 3, wherein the internal conical cavity (40) consists of a cavity including a narrowing (41) having a frustoconical surface favoring the coupling with the needle (2).

## Patentansprüche

1. Dehnungswerkzeug für eine Aufweitzange zum Formen von Muffen an den Enden von Rohren (T), die aus Kunststoff oder dergleichen hergestellt sind, die auf dem Gebiet der Klempnerarbeit verwendet werden, der Art umfassend ein zylinderförmiges Endstück (3), das aus der Annäherung von mehreren sektorförmigen Spannbacken (32) besteht, die radial beweglich sind unter der Wirkung einer von einer Zange betätigten, kegelförmigen Nadel (2), die geeignet ist, axial zwischen den genannten Spannbacken (32) in eine kegelförmige Aussparung (36) eingeführt zu werden, **dadurch gekennzeichnet, dass** es einen Einsatz (4) umfasst, der zwischen den genannten Spannbacken (32) axial beweglich und geeignet ist, die kegelförmige Nadel (2) der genannten Zange aufzunehmen, wenn das Werkzeug an der letzteren befestigt ist, wobei der genannten Einsatz (4) ein Ende umfasst, das einen kegelförmigen Hohlraum (40) umfasst, der dazu bestimmt ist, mit der genannten kegelförmigen Nadel (2) zusammenzuwirken, während sein anderes Ende (42) eine kegelförmige Gestalt aufweist, die der kegelförmigen Aussparung (36) der genannten Spannbacken (32) angepasst ist, wobei die kegelförmigen Teile (40, 42) der genannten Enden im wesentlichen gleiche Konuswinkel, jedoch unterschiedliche Durchmesser aufweisen.

2. Vorrichtung nach Anspruch 1, **dadurch gekennzeichnet, dass** das Endstück (3) ein leicht kegelstumpfartiges Endteil (35) aufweist.

3. Vorrichtung nach Anspruch 1 oder Anspruch 2, **dadurch gekennzeichnet, dass** sie eine Hülse (30) umfasst, die die sektorförmigen Spannbacken (32) festhält, die durch ihre Annäherung ein zylinderförmigen Endstück (3) bilden, das inwendig eine axiale kegelförmige Aussparung (36) aufweist, wobei die genannten Spannbacken (32) in radialer Versetzung beweglich sind und durch Federn (37) rückgestellt werden, während ein Einsatz (4) einer kegelförmigen äusseren Gestalt, der in der genannten kegelförmigen Aussparung (36) untergebracht und in der genannten Hülse (30) festgehalten ist, in dieser letzten axial beweglich ist und einen kegelförmigen inneren Hohlraum (40) aufweist, der geeignet ist, um die kegelförmige Nadel (2) einer Aufweitzange (2) aufzunehmen, wobei das kegelförmige äussere Profil (42) und der kegelförmige innere Hohlraum (40) denselben Konuswinkel aufweisen.

4. Vorrichtung nach Anspruch 3, **dadurch gekennzeichnet, dass** der kegelförmige innere Hohlraum (40) aus einem Hohlraum besteht, der eine Verengung (41) umfasst, die eine kegelstumpfartige Oberfläche aufweist, die die Kupplung mit der Nadel (2) erleichtert.
